# EUROPEAN PATENT SPECIFICATION

(11) **EP 2 624 393 B1**
(45) Date of publication and mention of the grant of the patent: **01.04.2015**
(21) Application number: 12154064.5
(22) Date of filing: 06.02.2012
(51) Int. Cl.: H02G 5/06, F03D 11/00, H02G 5/02

(54) **Wind turbine**
Windturbine
Éolienne

(43) Date of publication of application: 07.08.2013
(73) Proprietor: Siemens Aktiengesellschaft, 80333 München (DE)
(72) Inventor: Nielsen, Jacob Blach, 7442 Engesvang (DK); Munk-Hansen, Thorkil, 7323 Give (DK); Thomsen, Thyge Skovbjerg, 7400 Herning (DK)

(56) References cited:
- EP-A1- 0 933 855
- EP-A1- 1 265 332
- EP-A1- 1 786 080
- EP-A1- 1 931 005
- DE-A1-102008 018 790
- JP-A- 2004 084 518

## Description

The invention relates to a wind turbine comprising a generator for converting rotational energy into electric energy, a converter for converting electric power, and a plurality of busbars for conducting electricity from the generator to the converter.

Busbars for conducting electricity are very well known in electrical power distribution. Usually, a busbar is arranged as a strip or hollow cylinder made from metal, in particular copper or aluminium. Busbars are available in various sizes depending on the technical application. The size of the busbar determines the maximum amount of current that can be safely conducted.

Busbars are typically contained in distribution boards or busbar trays providing a protective enclosure. The busbars are either supported on insulators or surrounded by insulating material. The busbar tray providing the enclosure for the busbars is typically grounded for safety reasons.

It is also known to use busbars in wind turbines (see for example EP 1786080 A), in particular wind turbines using a direct drive technology, to conduct high amperage electric power between a generator and a converter. Wind turbines utilising direct drive technology directly transmit the torque exerted on a rotor hub carrying rotor blades to the generator. In particular, no gear box for transmitting the torque is arranged in between the rotor hub and the generator. The generator is directly coupled to a main shaft firmly mounted to the rotor hub.

However, the wind turbine and its components are object to vibrations and movements introduced by wind acting on the wind turbine or by rotating parts. In particular, such vibrations may cause a relative movement of the generator relative to the converter that may harm the busbars contained in the busbar tray and cause structural damage and malfunction.

It is an object of the invention to provide a wind turbine with an arrangement of busbars and busbar trays that is capable of compensating relative movement, in particular vibrations, of components of the wind turbine.

This is achieved by the above-mentioned wind turbine, wherein inventively the plurality of busbars are contained in a busbar tray comprising a first end and a second end opposite to the first end, wherein either the first end of the busbar tray is firmly mounted to a first component of the wind turbine and the second end of the busbar tray is mounted to a second component of the wind turbine so as to allow for a translation of the busbar tray and the second component in at least one direction or the busbar tray comprises at least two sections slidably arranged with respect to each other so as to allow for a telescoping movement in the at least one direction.

Thus, the second end of the busbar tray is mounted to the second component in a manner that allows for a compensation of relative movement, in particular introduced by vibrations. Alternatively, relative movement and vibrations are compensated by an arrangement of two sections that may be inserted into each other.

In particular, relative movement of components may be introduced by wind striking the wind turbine. Resonant vibration may occur during operation. Furthermore, movement of the tray may also occur during operation due to thermal expansion of the busbars or the tray caused by resistive heating while electric power is conducted.

The first end of the busbar tray may be a part of the generator. More specifically, the first end of the busbar tray may be firmly mounted to a bedframe of the generator. In this context firmly mounted means that there is no degree of freedom between the bedframe and the busbar tray. The bedframe supports the generator and mounts the generator within a nacelle of the wind turbine.

The second end of the busbar tray may be slidably received in a mounting structure that is firmly mounted to or part of a housing of the converter. Slidable reception of the second end of the busbar tray in the mounting structure allows for compensation of vibrations. Furthermore, manufacturing tolerances may be compensated by retaining the second end of the busbar tray in the mounting structure so as to allow for a translation of the busbar tray and the second component of the wind turbine, in particular the converter. Obviously, manufacturing tolerances may also be compensated by the at least two sections of the busbar tray arranged in telescoping agreement with respect to each other.

In one embodiment of the invention, the mounting structure has the shape of a fork adapted to support the second end of the busbar tray. The mounting structure extends over a length of the busbar tray parallel to the at least one direction so that vibrations of significant amplitudes may be compensated. The mounting structure retaining the second end of the busbar tray forming the converter interface serves as a guide. In particular, the connection between the second end of the bedframe tray and the mounting structure may be arranged as a form fit.

Advantageously, at least one dampening element is arranged between the mounting structure and the busbar tray. The dampening element dampens vibrations introduced to the busbar tray. Additionally, at least one auxiliary dampening element may be arranged in the busbar tray containing the busbars. The dampening elements support the busbars and thus further reduce vibrations introduced to the busbars. Furthermore, the auxiliary dampening elements supporting the busbars facilitate movement of the busbars relative to the busbar tray so that thermal expansion may be compensated.

The dampening elements and/or auxiliary dampening elements are made from an electrical and thermal insulating material. In particular, the dampening element and/or auxiliary dampening element may be made from nylon. The dampening element arranged between the mounting structure and the busbar tray facilitates relative movements between the busbar tray and the mounting structure in the at least one direction. In particular, relative movement due to thermal expansion may be compensated.

Each busbar is electrically conductively coupled to the converter and/or the generator by a flexible cable. The busbars are solid and stiff conductors made from a metal like copper or aluminium. Coupling the busbars to the converter and/or the generator by flexible cables ensures that electricity may be conducted through the busbars while being translatably arranged relative to the converter and/or the generator.

The busbar tray may comprise a u-shaped cross-section. A plurality of busbars are retained within the busbar tray so as to provide a mechanical protection for the busbars.

In a preferred embodiment of the invention, the busbar tray is covered with a cover element. Consequently, the busbar tray is arranged as a cavity surrounding the busbars. The cover element provides protection from fluids such as rain water and/or oil. Furthermore, the cover element may avoid that objects such as falling tools enter the tray and damage the busbars retained therein.

In one embodiment of the invention, the busbar tray comprises at least one venting hole so as to enhance convective cooling of the busbars during operation of the wind turbine. Busbars may reach temperatures of about 70 °C when in operation and conducting high current electric power. The venting holes may be arranged as a perforation of the busbar tray. Furthermore, the venting holes advantageously support draining of liquids that has entered into the busbar tray.

For safety reasons, it is intended to electrically insulate and ground the busbar tray. In particular, insulated and earthened components reduce the risk of injuries when personnel enters the nacelle of the wind turbine for maintenance purposes.

The busbar tray may be at least partially filled with foam so as to further dampen the vibrations of the busbars. The foam is preferably electrically insulating, so that an insulating layer surrounding each busbar may be omitted.

In a preferred embodiment of the invention, the busbar tray is segmented, i.e. made from a plurality of the segments. The segments of the busbar tray may be firmly fixed to each other. The busbars contained in the busbar tray may have a substantial weight. Thus, a busbar tray of sufficient stability is provided. In particular, the busbars may safely supported by the busbar tray even when the busbar tray is arranged as a self supporting part that is only mounted to other components of wind turbines at its ends.

In an alternative embodiment of the invention, two segments of the busbar tray are slidably arranged with respect to each other so as to allow for a telescoping movement in the at least one direction. In particular, the telescoping movement may compensate relative movement, vibration and/or thermal expansion.

In the following, the invention is described in detail with reference to the figures, wherein
- fig. 1: shows a busbar tray having a first end and a second end in a perspective view,
- fig. 2: shows an enlarged view of the second end of the busbar tray,
- fig. 3: shows the busbar tray with its first end firmly mounted to a bedframe of a generator,
- fig. 4: shows a sectional view through the second end of the busbar tray adjacent to a converter, and
- fig. 5: shows a top view of the second end of the busbar tray.

Corresponding parts are indicated in all figures by the same reference symbols.

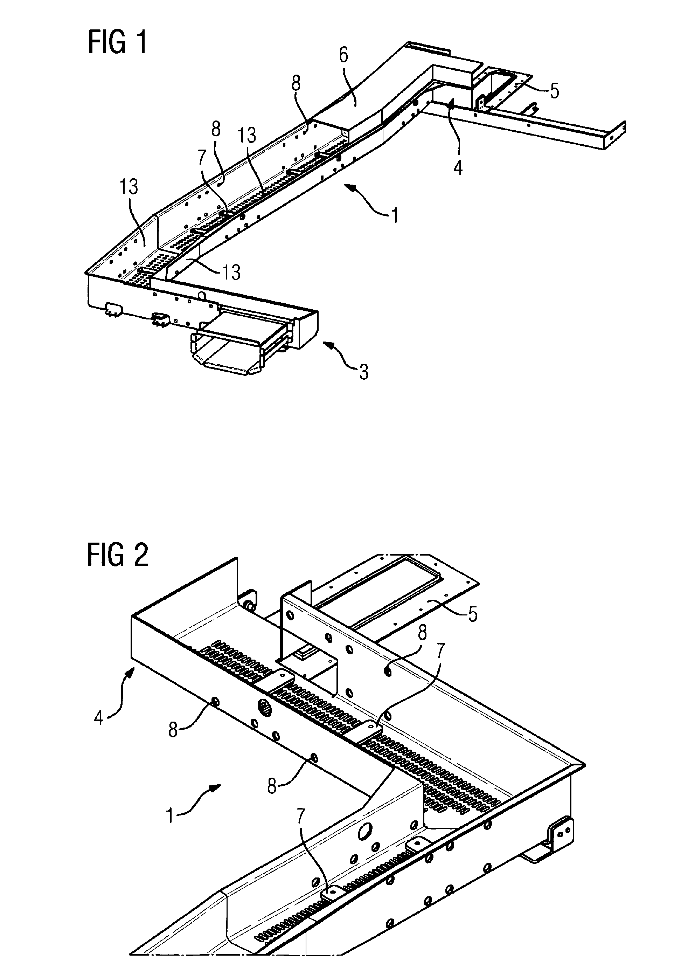

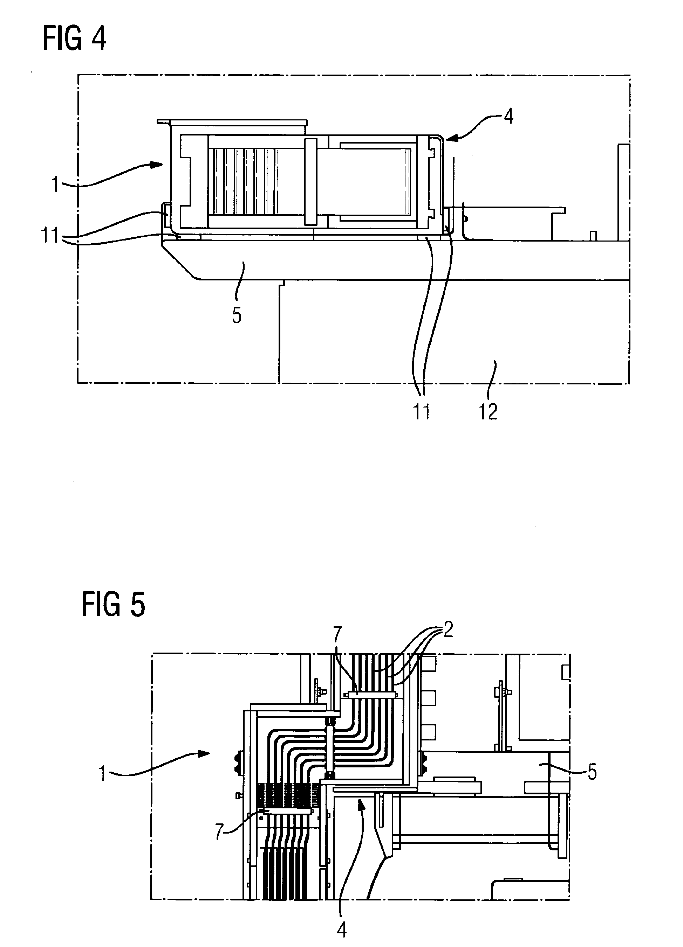

Fig. 1 shows a busbar tray 1 retaining a plurality of the segmented and electrically insulated busbars 2 that are illustrated in more detail in fig. 5. The busbar tray 1 comprises a first end 3 adapted to be firmly mounted to a first component of a wind turbine and a second end 4 opposite to the first end 3. The second end 4 is retained in a mounting structure 5 shaped like a fork. The mounting structure 5 is firmly bolted to a second component of the wind turbine.

In the exemplary embodiment depicted in the figures, the first component of the wind turbine is a generator capable of converting rotational energy into electric energy and the second component is a converter 12 for converting electric power that is, for example, shown in fig. 4. Rotational energy is transmitted to the generator by a main shaft firmly attached to a rotatable rotor hub carrying a plurality of rotor blades. The rotor hub, the main shaft, the generator and the converter 12 are arranged in a nacelle of the wind turbine. The principle layout and mode of operation of these devices is known in the state of the art. Hence, a detailed description of these components of the wind turbine is omitted.

The busbars 2 adapted to conduct electricity from the generator to the converter 12 are arranged within the busbar tray 1 that provides mechanical protection. In particular when maintenance work is performed within the nacelle, the busbars 2 retained in the busbar tray 1 and covered by the cover element 6 are protected from damages caused by falling objects that may, for example, be dropped from a hydraulic crane located inside the nacelle. The busbar tray 1 is a stiff construction which avoids vibration, in particular resonant vibration. Furthermore, the busbar tray 1 provides sufficient stability to support busbars 2 of considerable weight while being mechanically supported only in the areas of the first and second ends 3, 4.

The second end 4 of the busbar tray 1 is positioned on the mounting structure 5 so as to allow for a movement of the busbar tray 1 in at least one direction relative to the mounting structure 5 firmly attached to the second component of the wind turbine. Slidable guidance of the second end 4 of the busbar tray 1 in the mounting structure 5 is facilitated by dampening elements 11 shown in more detail in fig. 4.

Fig. 2 shows the second end 4 of the busbar tray 1 with the cover element 6 removed for illustrative purposes. A plurality of auxiliary dampening elements 7 are arranged within the busbar tray 1. The dampening elements 7 are made from nylon and are adapted to support the plurality of busbars 2 so as to allow for a movement of the busbars 2 induced by thermal expansion. When in operation, each busbar 2 may conduct a high current electric power so that temperatures between 60 °C and 80 °C may be reached. The auxiliary dampening elements 7 arranged as nylon pads space the busbars 2 arranged thereupon from the bottom of the busbar tray 1 so as to enhance convective cooling. The busbar tray 1 is made from a metal, in particular aluminium or steel.

The busbar tray 1 is perforated and comprises a plurality of venting holes 8 further enhancing cooling of the busbars 2. Furthermore, liquids such as water or oil that have entered the busbar tray 1 may be drained through the venting holes 8.

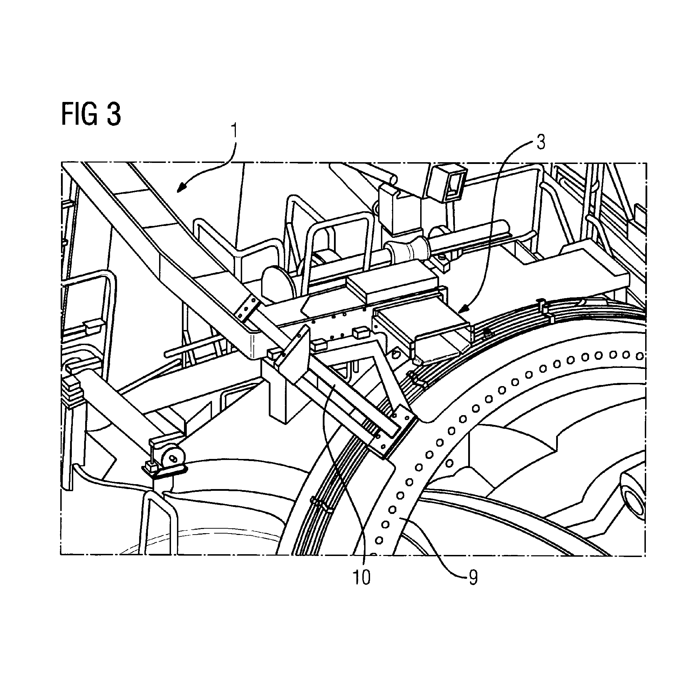

Fig. 3 shows the bedframe 9 mounting the generator within the nacelle of the wind turbine in perspective view. A support structure 10 is firmly attached to the bedframe 9. The support structure 10 is also firmly connected to the first end 3 of the busbar tray 1, so that there is no degree of translational or rotational freedom between the bedframe 9 and the busbar tray 1.

Fig. 4 shows a cross-section of the busbar tray 1 in vicinity of the converter 12 of the wind turbine. The second end 4 of the busbar tray 1 is retained in the mounting structure 5 shaped as a fork. The dampening elements 11 are arranged between the busbar tray 1 and the mounting structure 5. The dampening elements 11 are nylon pads that facilitate movement of the busbar tray 1 relative to the mounting structure 5 in the longitudinal direction extending perpendicular to the sectional plane shown in fig. 4. The dampening elements 11 dampen vibrations introduced to the busbar tray 1. Furthermore, the dampening elements 11 facilitate movement of the busbar tray 1 relative to the mounting structure 5 that may be induced by thermal expansion of the busbar tray 1 or the busbars 2 retained therein. Thermal expansion may be caused by resistive heating while electric power is conducted. The mounting structure 5 is firmly attached to the converter 12. Alternatively, the mounting structure 5 may be part of a housing of the converter 12. The mounting structure 5 is, in the exemplary embodiment shown, firmly affixed to the converter 12 by a plurality of bolts (not illustrated). Alternatively, the mounting structure 5 may be firmly attached to the second component of the wind turbine by suitable means known in the state of the art such as welding or the like.

Fig. 5 shows a top view of the second end 4 mounted to the mounting structure 5 so as to allow for a relative translation of the mounting structure 5 and the busbar tray 1. For illustrative purposes the cover element 6 is not shown. Six segmented busbars 2 made from copper are retained in the busbar tray 1 that reside on dampening elements 7. The busbars 2 are divided into three subsets comprising two busbars 2 each, wherein each subset is coupled to a first, a second and a third electric phase of the generator.

The busbar tray 1 is filled with a suitable foam adapted to further dampen vibrations of the busbars 2 (not illustrated). Furthermore, the busbar tray 1 is electrically insulated and grounded.

As can be seen in fig. 1, the busbar tray 1 is made from a plurality of segments 13 that are firmly interconnected to each other.

In an alternative embodiment of the invention, at least one connection between the different segments 13 of the busbar tray 1 allows for a sliding movement of the adjacent segments 13. Thus, the busbar tray comprises at least two sections that may be slid relative to each other to compensate relative movement caused by, for example, vibrations or thermal expansion.

The inventive wind turbine comprises the busbar tray 1 connected to a first and a second component that is adapted to compensate a relative movement of the components without imposing mechanical stress on the busbar tray 1 or the busbars 2 retained therein. This is achieved by either a telescopable section of the busbar tray 1 or retaining the second end 4 of the busbar tray 1 in a mounting structure 5 so as to allow for a relative movement of the busbar tray 1 and the mounting structure 5. Accordingly, the busbars are electrically connected to the generator and the converter 12 by flexible cables so that electricity may be conducted from the generator to the converter 12 when the wind turbine is in use.

Although the present invention has been described in detail with reference to the preferred embodiment, the present invention is not limited by the disclosed examples from which the skilled person is able to derive other variations without departing from the scope of the invention.

## Claims

1. Wind turbine comprising a generator for converting rotational energy into electric energy, a converter (12) for converting electric power, and a plurality of busbars (2) for conducting electricity from the generator to the converter (12), **characterized in that** the plurality of busbars are contained in a busbar tray (1) comprising a first end (3) and a second end (4) opposite to the first end (3), wherein either the first end (3) of the busbar tray (1) is firmly mounted to a first component of the wind turbine and the second end (4) of the busbar tray (1) is mounted to a second component of the wind turbine so as to allow for a translation of the busbar tray (1) and the second component in at least one direction or the busbar tray (1) comprises at least two sections slidably arranged with respect to each other so as to allow for a telescoping movement in the at least one direction.

2. Wind turbine according to claim 1, **characterized in that** the first end (3) is firmly mounted to a bedframe (9) of the generator.

3. Wind turbine according to claim 1 or 2, **characterized in that** the second end of the busbar tray (1) is slidably received in a mounting structure (5) that is firmly mounted to or part of a housing of the converter (12).

4. Wind turbine according to claim 3, **characterized in that** the mounting structure (5) has the shape of a fork adapted to support the second end (4) of the busbar tray (1).

5. Wind turbine according to claim 3 or 4, **characterized in that** at least one dampening element (11) is arranged between the mounting structure (5) and the busbar tray.

6. Wind turbine according to one of the previous claims, **characterized in that** the busbar tray (1) contains at least one auxiliary dampening element (7) to support at least one of the busbars.

7. Wind turbine according to one of the claims 3 to 6, **characterized in that** the dampening element (11) and/or auxiliary dampening element (7) is made from nylon.

8. Wind turbine according to one of the previous claims, **characterized in that** each busbar (1) is electrically conductively coupled to the converter (12) and/or the generator by a flexible cable.

9. Wind turbine according to one of the previous claims, **characterized in that** the busbar tray (1) comprises a u-shaped cross-section.

10. Wind turbine according to one of the previous claims, **characterized in that** the busbar tray (1) is covered by a cover element (6).

11. Wind turbine according to one of the previous claims, **characterized in that** the bus bar tray (1) comprises at least one venting hole (8).

12. Wind turbine according to one of the previous claims, **characterized in that** the busbar tray (1) is electrically insulated and grounded.

13. Wind turbine according to one of the previous claims, **characterized in that** the busbar (1) tray is at least partially filled with foam.

14. Wind turbine according to one of the previous claims, **characterized in that** the busbar tray (1) is segmented.

## Patentansprüche

1. Windturbine, welche einen Generator zum Umwandeln von Rotationsenergie in elektrische Energie, einen Wandler (12) zum Umwandeln elektrischer Leistung und mehrere Sammelschienen (2) zum Leiten von Elektrizität von dem Generator zu dem Wandler (12) umfasst, **dadurch gekennzeichnet, dass** die mehreren Sammelschienen in einem Sammelschienenträger (1) enthalten sind, der ein erstes Ende (3) und ein dem ersten Ende (3) gegenüberliegendes zweites Ende (4) umfasst, wobei entweder das erste Ende (3) des Sammelschienenträgers (1) fest an einer ersten Komponente der Windturbine angebracht ist und das zweite Ende (4) des Sammelschienenträgers (1) an einer zweiten Komponente der Windturbine angebracht ist, um eine Translation des Sammelschienenträgers (1) und der zweiten Komponente in wenigstens einer Richtung zu ermöglichen, oder der Sammelschienenträger (1) mindestens zwei Abschnitte umfasst, die gleitbeweglich zueinander angeordnet sind, um eine teleskopische Bewegung in der wenigstens einen Richtung zu ermöglichen.

2. Windturbine nach Anspruch 1, **dadurch gekennzeichnet, dass** das erste Ende (3) fest an einem Gestell (9) des Generators angebracht ist.

3. Windturbine nach Anspruch 1 oder 2, **dadurch gekennzeichnet, dass** das zweite Ende des Sammelschienenträgers (1) gleitend in einer Montagekonstruktion (5) aufgenommen ist, welche fest an einem Gehäuse des Wandlers (12) angebracht oder Teil eines solchen Gehäuses ist.

4. Windturbine nach Anspruch 3, **dadurch gekennzeichnet, dass** die Montagekonstruktion (5) die Form einer Gabel aufweist, die dazu eingerichtet ist, das zweite Ende (4) des Sammelschienenträgers (1) zu stützen.

5. Windturbine nach Anspruch 3 oder 4, **dadurch gekennzeichnet, dass** mindestens ein Dämpfungselement (11) zwischen der Montagekonstruktion (5) und dem Sammelschienenträger angeordnet ist.

6. Windturbine nach einem der vorhergehenden Ansprüche, **dadurch gekennzeichnet, dass** der Sammelschienenträger (1) mindestens ein Hilfsdämpfungselement (7) enthält, um mindestens eine der Sammelschienen zu stützen.

7. Windturbine nach einem der Ansprüche 3 bis 6, **dadurch gekennzeichnet, dass** das Dämpfungselement (11) und/oder das Hilfsdämpfungselement (7) aus Nylon hergestellt sind/ist.

8. Windturbine nach einem der vorhergehenden Ansprüche, **dadurch gekennzeichnet, dass** jede Sammelschiene (1) durch ein flexibles Kabel elektrisch leitend mit dem Wandler (12) und/oder dem Generator gekoppelt ist.

9. Windturbine nach einem der vorhergehenden Ansprüche, **dadurch gekennzeichnet, dass** der Sammelschienenträger (1) einen U-förmigen Querschnitt aufweist.

10. Windturbine nach einem der vorhergehenden Ansprüche, **dadurch gekennzeichnet, dass** der Sammelschienenträger (1) mit einem Abdeckelement (6) bedeckt ist.

11. Windturbine nach einem der vorhergehenden Ansprüche, **dadurch gekennzeichnet, dass** der Sammelschienenträger (1) mindestens ein Entlüftungsloch (8) umfasst.

12. Windturbine nach einem der vorhergehenden Ansprüche, **dadurch gekennzeichnet, dass** der Sammelschienenträger (1) elektrisch isoliert und geerdet ist.

13. Windturbine nach einem der vorhergehenden Ansprüche, **dadurch gekennzeichnet, dass** der Sammelschienenträger (1) wenigstens teilweise mit Schaumstoff gefüllt ist.

14. Windturbine nach einem der vorhergehenden Ansprüche, **dadurch gekennzeichnet, dass** der Sammelschienenträger (1) segmentiert ist.

## Revendications

1. Éolienne comprenant un générateur pour convertir une énergie de rotation en une énergie électrique, un convertisseur (12) pour convertir une puissance électrique, et une pluralité de barres omnibus (2) pour conduire l'électricité du générateur jusqu'au convertisseur (12), **caractérisée en ce que** la pluralité de barres omnibus sont contenues dans un compartiment (1) de barres omnibus comprenant une première extrémité (3) et une deuxième extrémité (4) opposée à la première extrémité (3), dans laquelle soit la première extrémité (3) du compartiment (1) de barres omnibus est fermement montée sur un premier composant de l'éolienne et la deuxième extrémité (4) du compartiment (1) de barres omnibus est montée sur un deuxième composant de l'éolienne de façon à permettre une translation du compartiment (1) de barres omnibus et du deuxième composant dans au moins une direction, soit le compartiment (1) de barres omnibus comprend au moins deux sections agencées de façon coulissante l'une par rapport à l'autre de façon à permettre un mouvement télescopique dans l'au moins une direction.

2. Éolienne selon la revendication 1, **caractérisée en ce que** la première extrémité (3) est fermement montée sur un cadre (9) du générateur.

3. Éolienne selon la revendication 1 ou 2, **caractérisée en ce que** la deuxième extrémité du compartiment (1) de barres omnibus est reçue de façon coulissante dans une structure (5) de montage qui est fermement montée sur un ou une partie d'un logement du convertisseur (12).

4. Éolienne selon la revendication 3, **caractérisée en ce que** la structure (5) de montage a la forme d'une fourche adaptée à supporter la deuxième extrémité (4) du compartiment (1) de barres omnibus.

5. Éolienne selon la revendication 3 ou 4, **caractérisée en ce qu'**au moins un élément (11) d'amortissement est agencé entre la structure (5) de montage et le compartiment de barres omnibus.

6. Éolienne selon l'une des revendications précédentes, **caractérisée en ce que** le compartiment (1) de barres omnibus contient au moins un élément (7) d'amortissement auxiliaire pour supporter au moins une des barres omnibus.

7. Éolienne selon l'une des revendications 3 à 6, **caractérisée en ce que** l'élément (11) d'amortissement et/ou l'élément (7) d'amortissement auxiliaire est constitué de nylon.

8. Éolienne selon l'une des revendications précédentes, **caractérisée en ce que** chacune des barres omnibus (1) est couplée de façon électriquement conductrice au convertisseur (12) et/ou au générateur par un câble flexible.

9. Éolienne selon l'une des revendications précédentes, **caractérisée en ce que** le compartiment (1) de barres omnibus comprend une section transversale en forme de u.

10. Éolienne selon l'une des revendications précédentes, **caractérisée en ce que** le compartiment (1) de barres omnibus est recouvert par un élément (6) de capot.

11. Éolienne selon l'une des revendications précédentes, **caractérisée en ce que** le compartiment (1) de barres omnibus comprend au moins un trou (8) de mise à l'air libre.

12. Éolienne selon l'une des revendications précédentes, **caractérisée en ce que** le compartiment (1) de barres omnibus est électriquement isolé et connecté à la terre.

13. Éolienne selon l'une des revendications précédentes, **caractérisée en ce que** le compartiment (1) de barres omnibus est au moins partiellement rempli d'une mousse.

14. Éolienne selon l'une des revendications précédentes, **caractérisée en ce que** le compartiment (1) de barres omnibus est segmenté.
